# NOUVEAU FASCICULE DE BREVET EUROPEEN

(11) **EP 0 108 684 B2**
(45) Date de publication et mention de la décision concernant l'opposition: **22.07.1998**
(45) Mention de la délivrance du brevet: 28.05.1986
(21) Numéro de dépôt: 83402106.5
(22) Date de dépôt: 27.10.1983
(51) Int. Cl.: B04B 5/10, B01D 37/00

(54) **Installation et procédé de séparation des constituants d'une suspension**
Installation und Verfahren zum Separieren von Bestandteilen einer Suspension
Installation and method for separating the constituents of a suspension

(30) Priorité: 03.11.1982 FR 8218420
(43) Date de publication de la demande: 16.05.1984
(73) Titulaire: GUINARD CENTRIFUGATION Société dite :, F-92210 Saint-Cloud (FR)
(72) Inventeur: Antoine, Claude, F-78740 La Celle les Bordes (FR)
(74) Mandataire: Bourgognon, Jean-Marie

(56) Documents cités:
- FR-A- 979 348
- FR-A- 2 390 190
- GB-A- 1 505 860
- US-A- 3 762 563
- US-A- 3 954 611
- US-A- 3 956 131
- US-A- 3 959 140
- US-A- 4 153 553
- ENGINEERING, vol. 198, 18 décembre 1964, pages 773-774, Londres, GB "Stream-line edge filter"
- Page XI of an instructional brochure published by Svenka Teknologforeningen in 1951
- Alfa-Laval AB, technical leaflets Mobile Unites VNPX 4075SGD and 410 SGD, March 1981
- Alfa-Laval, technical leaflet "Slop Oil Treatment for Crude Oil Recovery", August 1982
- Alfa-Laval, technical leaflet PD4095E for Self-Cleaning Strainer Model SIL, May 1981
- Alfa-Laval, Manuel de l'opérateur, Alfa-Laval (OM SO262oF/7811)
- Alfa-Laval, "Wax Recovery in Wool Scouring Lines" PB40801E2; Reg. 45423; 8010)
- Alfa-Laval, Brochure PB 83095E, May 1979
- Alfa-Laval, "Wax Recovery in Wool Scouring Lines (PB40801E2; Reg. 45423; 8010)
- Alfa-Laval, leaflet "Decanter Centrifuge chemical industry model NX14", printed in August 1979
- Alfa-Laval, technical brochure "Waste Oil Recovery", May 1982
- Alfa-Laval, technical brochure "Waste Oil Reclamation The Works Manager's Guide to Working Fluid Economy", March 1979

## Description

La présente invention est relative aux installations et aux procédés de séparation des constituants d'une suspension contenant des matières solides dont certaines sont plus denses et d'autres moins denses que l'un des constituants liquides de la suspension. L'invention s'applique tout particulièrement à la récupération des constituants des boues de cuve, notamment des boues de réservoirs d'hydrocarbures.

On connaît des séparateurs centrifuges aptes à opérer la séparation en continu d'une ou de deux phases liquides non miscibles avec évacuation en continu d'une phase solide. Ces séparateurs centrifuges, fournis par la demanderesse sous les noms de bol de type DCS, comprennent essentiellement un bol tournant et un convoyeur interne tournant à une vitesse différentielle par rapport au bol de la machine. Le convoyeur permet, d'une part, de remonter en continu les sédiments vers des orifices d'éjection en évitant toute accumulation de solides dans le bol et, d'autre part, de décolmater les buses d'éjection, ce qui limite les risques de bouchage.

Ces séparateurs centrifuges ont fait leurs preuves pour séparer en leurs constituants solides et liquides des suspensions difficiles à séparer. Ces séparateurs reposent sur le principe de la centrifugation, en sorte que les constituants sont séparés en fonction de leur densité ou masse volumique. La conception de ces séparateurs centrifuges suppose que les constituants solides sont plus denses que les constituants liquides à séparer. Mais si la suspension contient des matières solides moins denses que les constituants liquides, comme c'est le cas notamment pour les boues de stockage de réservoirs à produits pétroliers, le séparateur centrifuge ne peut pas être utilise sous peine de graves ennuis de fonctionnement.

Au US-3 762 563, on ne pose pas le problème de la séparation des constituants d'une suspension comprenant des constituants solides moins denses que les constituants liquides. On y décrit simplement un filtre auto-nettoyant du type utilisé dans l'installation suivant l'invention sans qu'il soit prévu de réchauffeur intermédiaire entre le titre et la centrifugeuse ni non plus de monter les éléments constitutifs de l'installation sur des véhicules.

Au US-A-3 954 611, on décrit un procédé de purification des huiles dans des boîtes de vitesse et des moteurs. Cette huile est utilisée pour lubrifier les palliers et autres parties mobiles. Une telle suspension huileuse comprend des hydrocarbures liquides, et des parties métalliques. Mais cette suspension ne contient pas des constituants solides tels que des matières plastiques qui sont moins denses que les constituants liquides.

Au US-A-4 153 553, on décrit une installation de récupération du pétrole dans les boues d'hydrocarbures. Cette installation ne comprend ni filtre auto-nettoyant ni séparateur centrifuge. On ne prévoit pas de séparer les produits solides moins danses que les produits liquides préalablement à la centrifugation.

L'invention pallie cet inconvénient en associant au séparateur centrifuge un filtre du type particulier, apte non seulement à enlever une grande partie des matières solides quelle que soit leur densité et donc à soulager d'autant le séparateur centrifuge, mais surtout à séparer les matières solides moins denses que les constituants liquides de la suspension, de sorte que le filtrat du filtre peut être envoyé sans danger directement au séparateur centrifuge.

L'invention a donc pour objet une installation et un procédé de séparation des constituants d'une suspension tels que définis aux revendications 1 et 2 respectivement.

Dans le filtre auto-nettoyant dont l'enveloppe est généralement sensiblement de révolution à axe vertical avec une sortie pour les sédiments prévue au bas de l'enveloppe, les matières solides très danses se trouvant dans la suspension amenée au sommet de l'enveloppe s'abaissent peu à peu dans celle-ci jusqu'à venir constituer un bouchon solide devant la sortie pour les sédiments. Les matières solides moins danses que les constituants liquides de la suspension ont tendance à venir colmater la surface filtrante, mais sont décolmatées par les moyens de décolmatage qui comprennent notamment des brosses entraînées en rotation par rapport à l'axe de la surface filtrante, laquelle est coaxiale à l'enveloppe. Ces produits solides moins danses que les constituants liquides de la suspension viennent ainsi eux aussi dans le bouchon qui, de temps à autre, est évacué par la sortie pour les sédiments.

Un réchauffeur intermédiaire est intercalé entre le filtre auto-nettoyant et le séparateur centrifuge de manière à réchauffer les produits qui entrent dans le séparateur centrifuge et à favoriser le fonctionnement de celui-ci.

L'ensemble de cette installation est monté sur un véhicule qui peut donc être amené devant chaque réservoir de stockage à nettoyer, avec possibilité de rejeter directement les sédiments et l'eau et de récupérer les produits pétroliers qui seuls auront à être transportés.

La chaudière d'alimentation en vapeur du réchauffeur soit monté sur un véhicule distinct, la chaudière pouvant servir également à alimenter d'autres installations et, notamment, un décanteur primaire avec réchauffeur monté lui aussi sur un véhicule distinct et raccordé directement au réservoir de stockage. Pour nettoyer le réservoir de stockage, on envoie de l'eau chaude au bas de celui-ci, l'eau chaude pouvant provenir de la chaudière, de manière à rendre les bornes solides se trouvant au fond du réservoir aptes à être pompées. On les pompe alors à l'aide d'une pompe pour les envoyer dans le décanteur ou on les réchauffe à l'aide de vapeur provenant de la chaudière de manière à pouvoir opérer une première séparation entre les produits organiques et l'eau, puis on envoie les produits organiques encore très chargés d'eau et de produits solides éventuellement minéraux au filtre auto-nettoyant par l'intermédiaire de pompes et, de préférence, d'un bac tampon.

Aux dessins annexés, donnés uniquement à titre d'exemple ;
la figure 1 est un schéma d'une installation suivant l'invention,
la figure 2 est un schéma du filtre auto-nettoyant de l'installation, et
la figure 3 est un schéma du séparateur centrifuge de l'installation suivant l'invention.

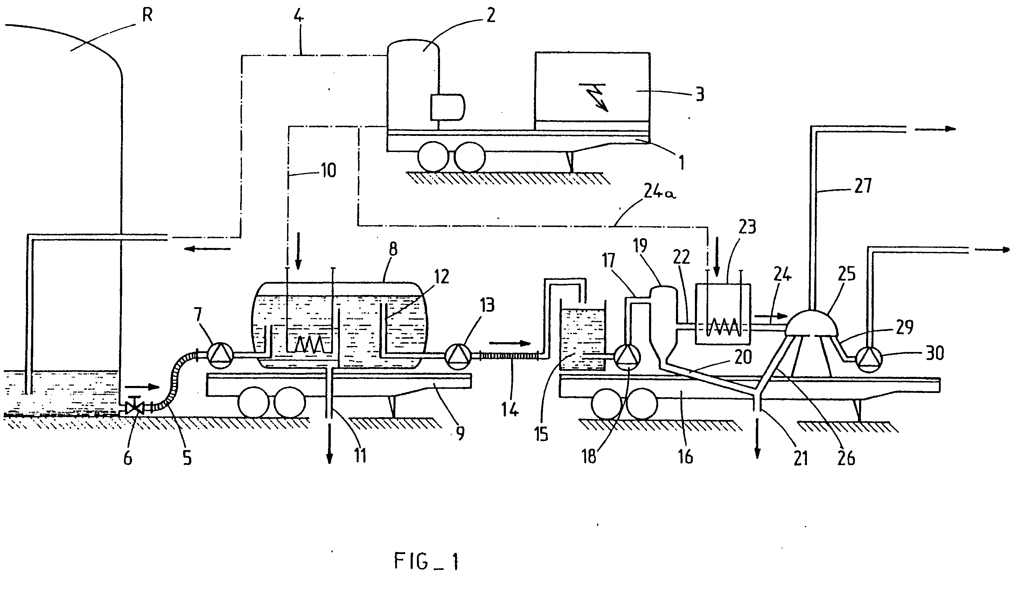

L'installation représentée à la figure 1 est branchée sur un réservoir R de stockage de produits pétroliers. L'installation comprend un premier véhicule 1 portant un générateur d'eau chaude et de vapeur ou chaudière 2 à groupe électrogène 3. Ce générateur 2 peut être relié par un conduit 4 à une entrée du réservoir R débouchant au bas de celui-ci dans les bornes. Du bas du réservoir R part un conduit 5, avec vanne 6 et pompe 7, qui débouche à mi-hauteur d'une cuve ou citerne 8 de prédécantation portée par un véhicule 9. La citerne est chauffée par un circuit 10 de vapeur provenant du générateur 2. Le bas de la citerne comprend une sortie 11 pour de l'eau. Du voisinage du haut de la citerne 8 part un conduit 12 avec pompe 13 qui, par un conduit souple 14, débouche dans un bac tampon 15 porté par un troisième véhicule 16. Ce véhicule porte, en outre, le reste de l'installation. Du bas du bac tampon 15 part un conduit 17 avec pompe 18, qui communique avec l'entrée pour la suspension d'un filtre auto-nettoyant 19. La sortie pour les sédiments du filtre auto-nettoyant 19 communique par un conduit 20 avec un conduit 21 de rejet des sédiments. La sortie pour le filtrat du filtre autonettoyant 19 communique avec un conduit 22 qui alimente un réchauffeur intermédiaire 23 réchauffé par un circuit 24ₐ de vapeur provenant du générateur 2. Le réchauffeur 23 communique par un conduit 24 avec un séparateur centrifuge 25 ayant une sortie pour les sédiments qui communique avec un conduit 26 rejoignant le conduit 21, une sortie pour le constituant liquide le plus dense qui communique avec un conduit 27 et une sortie pour le constituant liquide moins dense qui communique avec un conduit 29 muni d'une pompe 30.

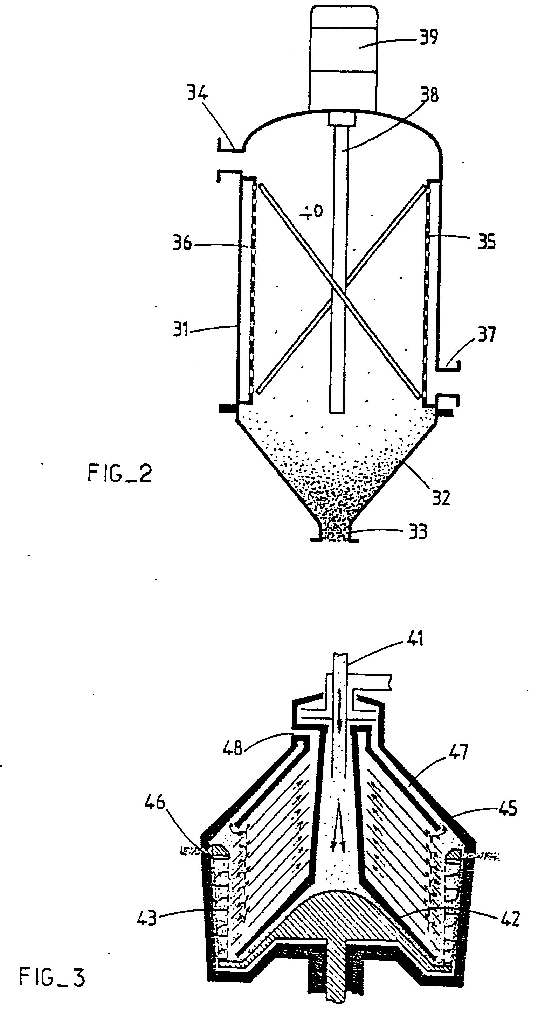

La figure 2 est un schéma plus détaillé du filtre auto-nettoyant 19. Ce filtre comprend essentiellement une enveloppe 31 sensiblement de révolution autour d'un axe vertical et dont le bas affecte la forme d'un entonnoir 32 à sortie 33 pour les sédiments. L'enveloppe est munie en haut d'une entrée 34 pour la suspension à filtrer. Une surface filtrante annulaire 35 est fixée le long de la paroi cylindrique intérieure de l'enveloppe 31 en délimitant avec celle-ci une chambre 36 annulaire fermée pour le filtrat. La chambre 36 est munie d'une sortie 37 traversant l'enveloppe 31. L'arbre 38 d'un motoréducteur 39 s'étend suivant l'axe vertical du filtre et porte une série de brosses 40 inclinées par rapport à l'horizontal. Ces brosses sont entraînées en rotation et viennent frotter la surface filtrante 35 et la décolmater.

Le fonctionnement de ce filtre auto-nettoyant est le suivant ;

La suspension entre par l'entrée 34. Les constituants solides les plus denses tombent d'eux-mêmes peu à peu par gravité au fond et se rassemblent dans l'entonnoir 32 devant la sortie 33, puisqu'ils ne peuvent pas traverser la surface filtrante 35. Les constituants solides les moins denses sont entraînés vers la surface filtrante 35 et auraient tendance à y rester et a la colmater s'ils n'étaient pas repoussés vers le bas par les brosses 40, en sorte qu'ils s'agglomèrent eux aussi au bouchon de matières solides qui se forme peu à peu devant la sortie 33. Les constituants liquides additionnés de constituants solides très fins, par exemple d'une granulométrie inférieure à 0,4 mm, traversent la surface filtrante 35 pour arriver dans la chambre 36 pour le filtrat et ressortent par la sortie 37. De temps à autre, on ouvre la sortie 33 pour faire sortir l'agglomérat de matières solides qui s'accumulent dans l'entonnoir 32. Ce filtre est ainsi susceptible de fonctionner en continu, puisqu'il est auto-nettoyant et présente la particularité remarquable d'éliminer aussi, malgré son fonctionnement en continu, les constituants solides de la suspension moins denses que les constituants liquides de celle-ci.

La figure 3 est un schéma du séparateur centrifuge 25. Ce séparateur qui fonctionne en continu comprend une entrée 41 centrale pour la suspension dans un bol 42 tournant à une vitesse différente d'un convoyeur interne 43 disposé à la périphérie du bol au voisinage de l'enveloppe 45 de l'ensemble du séparateur centrifuge. Sous l'effet de la force centrifuge, les fines solides plus denses sont immédiatement plaquées sur le convoyeur 43 et sortent par des orifices 46 d'éjection, tandis que les deux constituants liquides à séparer se séparent dans la pile de plateaux inclinés à l'intérieur du bol en fonction de leur dénsité, une sortie 47 étant prévue pour la phase liquide plus dense qui est rejetée à la périphérie et qui repousse vers l'intérieur le constituant liquide moins dense pour lequel est prévue une sortie 48.

L'installation fonctionne de la manière suivante :

On envoie de l'eau chaude par le conduit 4 au bas des réservoirs de stockage de produits pétroliers. Cette eau chaude met les bornes en suspension de manière à rendre l'ensemble suffisamment peu visqueux pour être pompé par la pompe 7 dans la cuve 8 de décantation. Dans la cuve, la suspension de bornes et d'eau chaude est réchauffée par de la vapeur provenant du générateur 2 et amenée par le conduit 10, de manière à favoriser la décantation. De l'eau est rejetée par le conduit 11, tandis que le reste de la suspension, qui contient encore de l'eau, des produits hydrocarburés et des sédiments solides tant moins denses que plus denses que les constituants liquides, est envoyé par la pompe 13 et par le conduit 14 au bac tampon 15. De celui-ci, la suspension est envoyée par la pompe 18 et le conduit 17 dans le filtre auto-nettoyant 19. La plus grande partie des produits solides et, notamment, ceux moins denses que les constituants liquides de la suspension sont rejetés à l'extérieur par le conduit 20 et par le conduit 21, tandis que les constituants liquides et les produits solides très fins passent dans le réchauffeur intermédiaire 23 qui les réchauffe afin de favoriser l'action du séparateur centrifuge 25 auquel la suspension est amenée par le conduit 24 qui est relié à l'alimentation 41 du séparateur. Les constituants solides sont séparés dans le séparateur et sortent par les orifices 46 qui communiquent avec le conduit 26 menant au conduit 21. L'eau de plus grande masse volumique que les produits pétroliers sort par la sortie 41 qui communique avec le conduit 27 et peut être, le cas échéant, retournée au générateur 2 d'eau chaude et de vapeur. La sortie 46 est reliée au conduit 29 par lequel on récupère des produits pétroliers de valeur.

L'installation peut fonctionner en continu, peut être déplacée pour être amenée auprès d'une cuve à nettoyer et permet de ne transporter que le produit pétrolier récupéré sans avoir à attendre que ce produit se soit séparé de l'eau par décantation dans des cuves.

## Revendications

1. Installation de séparation des constituants de boues de réservoirs d'hydrocarbures, qui comprend, comme appareils de séparation, un séparateur centrifuge (25) à bol tournant (46) et, en amont de ce dernier, un filtre auto-nettoyant (19) constitué d'une enveloppe (31) ayant une entrée (34) pour la suspension et une sortie (33) pour les sédiments, d'une surface filtrante (35) délimitant avec la paroi intérieure de l'enveloppe (31) une chambre (36) pour le filtrat munie d'une sortie (37) pour celui-ci, et de moyens à brosses (38 à 40) de décolmatage de la surface filtrante (35), entraînées en rotation par rapport à l'axe de révolution de la surface filtrante (35), caractérisée en ce que
a) il n'y a qu'un seul séparateur centrifuge (25) et c'est un séparateur du type comprenant un convoyeur (43) interne tournant à une vitesse différentielle par rapport au bol, de manière à séparer simultanément et d'une manière continue des constituants solides et deux constituants liquides de densité différente, et des orifices (46) d'éjection des solides par lesquels ceux-ci sortent en continu,
b) la sortie du filtre auto-nettoyant (19) communique directement, sans interposition d'autres appareils de séparation, avec l'entrée du séparateur centrifuge (25),
c) un réchauffeur intermédiaire (23) est intercalé entre le filtre auto-nettoyant (19) et le séparateur centrifuge (25),
d) l'installation est montée sur un véhicule (16) et,
e) il est prévu une chaudière (2) d'alimentation en vapeur du réchauffeur (23) montée sur un véhicule (1) distinct.

2. Procédé de séparation des constituants d'une boue de réservoirs d'hydrocarbures contenant des matières solides dont certaines sont plus denses et d'autres moins denses que les constituants liquides de la suspension qui sont essentiellement des hydrocarbures et de l'eau, qui consiste à séparer tous les constituants solides moins denses et une partie du constituant solide plus dense de la suspension dans un premier stade, caractérisé en ce qu'il consiste à séparer ensuite simultanément et sans stade de séparation intermédiaire, en trois constituants distincts, dans un second stade, l'eau, les hydrocarbures et une seconde partie du constituant solide plus dense qui est déshuilée.

3. Procédé suivant la revendication 2, caractérisé en ce qu'il consiste à effectuer le premier stade dans un filtre auto-nettoyant comprenant une chambre annulaire entourée d'une enveloppe, cette chambre annulaire comprenant un orifice d'entrée, un orifice de sortie pour le filtrat, un orifice de sortie pour le sédiment et une surface annulaire de filtration interposée entre l'orifice de sortie pour le filtrat et la partie intérieure de la chambre annulaire et un élément tournant disposé dans cette chambre et comprenant des moyens pour maintenir la surface filtrante annulaire exempte des particules.

4. Procédé suivant la revendication 3, caractérisé en ce qu'il consiste à effectuer la centrifugation dans un séparateur centrifuge comprenant un bol tournant et un convoyeur interne tournant à une vitesse différentielle par rapport au bol et des orifices d'éjection des sédiments, par lesquels ceux-ci sortent en continu.

## Claims

1. Apparatus for separating the constituents of sludges from reservoirs for hydrocarbons, which comprises, as the separating equipment, a centrifugal separator (25) with a rotating bowl (46) and, upstream thereof, a self-cleaning filter (19) comprising a casing (31) having an inlet (34) for the suspension and an outlet (33) for the sediment, a filtering surface (35) which defines, with the inner wall of the outer casing (31), a chamber (36) for the filtrate, this chamber having an outlet (37) for the filtrate, and brush means (38 to 40) for clearing the filtering surface (35), these brush means being rotationally driven relative to the rotation axis of the filtering surface (35), characterised in that
a) there is only one centrifugal separator (25) and it is a separator of the type comprising an internal conveyor (43) rotating at a differential speed relative to the bowl, so as to achieve simultaneous and continuous separation of solid constituents and two liquid constituents of different densities, and ejection orifices (46) for the solids, through which they are continuously expelled,
b) the outlet of the self-cleaning filter (19) communicates directly with the inlet of the centrifugal separator (25), without any other separation equipment placed in between,
c) an intermediate heater (23) is interposed between the self-cleaning filter (19) and the centrifugal separator (25),
d) the apparatus is mounted on a vehicle (16) and
e) a boiler (2) for supplying steam to the heater (23) is provided, mounted on a separate vehicle (1).

2. Process for separating the constituents of a sludge from hydrocarbon reservoirs containing solid substances, some of which are more dense and some less dense than the liquid constituents of the suspension, which are essentially hydrocarbons and water, which comprises separating all the less dense solid constituents and part of the more dense solid constituent of the suspension in a first step, characterised in that it comprises subsequently, in a second step, simultaneously and with no intermediate separation step, separating the water, the hydrocarbons and a second part of the more dense solid constituent, which is deoiled , into three distinct constituents.

3. Process according to claim 2, characterised in that it comprises carrying out the first step in a self-cleaning filter comprising an annular chamber surrounded by a casing, this annular chamber comprising an inlet orifice, an outlet orifice for the filtrate, an outlet orifice for the sediment and an annular filtration surface interposed between the outlet orifice for the filtrate and the inner part of the annular chamber and a rotating element arranged in thin chamber and comprising means for keeping the annular filtering surface free from particles.

4. Process according to claim 3, characterised in that it comprises carrying out the centrifugation in a centrifugal separator comprising a rotating bowl and an internal conveyor rotating at a differential speed relative to the bowl and ejection orifices for the sediment, through which it is expelled continuously.

## Patentansprüche

1. Trennanlage für Bestandteile von Schlämmen von Kohlenwasserstoff-Behältern, die als Trennapparat einen Fliehkraftabscheider (25) mit einer sich drehenden Trommel (46) und stromaufwärts dieses letzteren einen selbstreinigenden Filter (19) umfaßt, der aus einer Umhüllung (31) mit einem Einlaß (34) für die Suspension und einen Auslaß (33) für die Sedimente, aus einer filtrierenden Fläche (35), die zusammen mit der Innenwand der Umhüllung (31) eine Kammer (36) für das Filtrat begrenzt, die mit einem Auslaß (37) dafür versehen ist, und aus Bürsteneinrichtungen (38 bis 40) zum Reinigen der filtrierenden Fläche (35) gebildet ist, die zur Drehung um die Drehachse der filternden Oberfläche (35) angetrieben wird, dadurch **gekennzeichnet,** daß
(a) es nur einen einzigen Fliehkraftabscheider (25) gibt und dies eine Trenneinrichtung eines Typs ist, der einen inneren Förderer (43), der sich mit einer zur Trommel unterschiedlichen Geschwindigkeit dreht, und zwar in einer Art und Weise der simultanen und kontinuierlichen Trennung der Feststoffbestandteile und zweier flüssigen Bestandteile mit unterschiedlicher Dichte, und Öffnungen (46) zum Ausspritzen von Feststoffen, durch welche sie fortlaufend austreten, umfaßt,
(b) der Ausgang des selbstreinigenden Filters (19) direkt, ohne dazwischen andere Trennapparate zu positionieren, mit dem Eingang des Fliehkraftabscheiders (25) in Verbindung steht,
(c) ein Zwischenerhitzer (23) zwischen dem selbstreinigenden Filter (19) und dem Trennabscheider (25) zwischengeschaltet ist,
(d) die Anlage auf ein Fahrzeug (16) angebracht ist und,
(e) ein Kessel (2) zur Dampfspeisung des Erhitzers (23), der auf einem unterschiedlichen Fahrzeug (1) angebracht ist, vorgesehen ist.

2. Verfahren zum Trennen der Bestandteile eines Schlamms von Kohlenwassenstoff-Behältern, die Feststoffe enthalten, von denen gewisse dichter sind und andere weniger dicht, als die flüssigen Bestandteile der Suspension, bei denen es sich im wesentlichen um Kohlenwasserstoffe und Wasser handelt, das in einer ersten Stufe im Trennen der Suspension in alle weniger dichten Feststoffbestandteile und einem Teil dichterer Feststoffbestandteile besteht, dadurch **gekennzeichnet,** daß es darin besteht, ohne eine Zwischentrennstufe darauffolgend in einem zweiten Stadium simultan Wasser, die Kohlenwasserstoffe und einen zweiten Teil der dichteren Feststoffbestandteile, der entölt ist, in drei verschiedene Bestandteile zu trennen.

3. Verfahren nach Anspruch 2, dadurch **gekennzeichnet,** daß es darin besteht, die erste Stufe in einem selbstreinigenden Filter zu bewirken, das eine von einer Umhüllung umgebene Ringkammer aufweist, wobei diese Ringkammer eine Eintrittsöffnung, eine Austrittsöffnung für das Filtrat, eine Austrittsöffnung für das Sediment und eine ringförmige Filterfläche, die zwischen der Austrittsöffnung für das Filtrat und dem inneren Teil der ringförmigen Kammer angeordnet ist, und ein sich drehendes Element, das in dieser Kammer angeordnet ist, aufweist und Einrichtungen aufweist, um die filtrierende ringförmige Fläche von Teilchen freizuhalten.

4. Verfahren nach Anspruch 3, dadurch **gekennzeichnet,** daß es darin besteht, das Zentrifugieren in einem Fliehkraftabscheider zu bewirken, der eine sich drehende Trommel und einen sich bezüglich der Trommel mit einer unterschiedlichen Geschwindigkeit drehenden inneren Förderer und Öffnungen zum Ausspritzen der Sedimente, durch die diese fortlaufend austreten, umfaßt.
